# EUROPEAN PATENT APPLICATION

(11) **EP 1 382 372 A1**
(43) Date of publication of application: **21.01.2004**
(21) Application number: 03254423.1
(22) Date of filing: 12.07.2003
(51) Int. Cl.: A63F 13/12

(54) **System and method to integrate digital characters across multiple interactive games**

(30) Priority: 19.07.2002 US 199394
(71) Applicant: Sorrent, Inc., San Mateo, California 94404 (US)
(72) Inventor: Orr, Scott Stewart, Foster City California 94404 (US); Perkins, Henry Wilder, III, Santa Clara California 95051 (US)
(74) Representative: W.P. Thompson & Co.

(57) **Abstract**

A system and method to integrate digital characters across multiple interactive games are described. Responsive to a request from a user to participate in an interactive game, a list including at least one character name is provided, each character name corresponding to a character useable in the interactive game, the character being associated with the user. Responsive to selection of a character name from the list by the user, at least one general attribute value associated with the character corresponding to the selected character name is retrieved from at least one general attributes table within a network-accessible database, the at least one general attribute value being used to process the associated character in the operation of the interactive game.

## Description

### FIELD OF THE INVENTION

This invention relates generally to interactive gaming, and, more particularly, to a system and method to integrate digital characters across multiple interactive games.

### BACKGROUND

The explosive growth of the Internet as a publication and interactive communication platform has created an electronic environment that is changing the way business is transacted. As the Internet becomes increasingly accessible around the world, communications between users increase exponentially.

One area that experienced tremendous growth in recent years is interactive gaming. Users access interactive games hosted on a website via wired or wireless networks and play individually or communicate with other users that access the same website and desire to play similar games. In order to be able to play the interactive games, users set up characters for each particular game. However, these characters are specific to each game and cannot be maintained across multiple games.

Attempts have been made to solve the disparity of character systems in paper-based role-playing games using a variety of paper conversion guides. The conversion guides published by both role-playing game developers and users serve as a proselytizing mechanism whereby the new game is intended as a replacement for the old game. Any retrenchment back to the original game would necessarily have to resort to a different conversion guide. Therefore, a conversion from game A to game B, followed by a conversion from game B to game A, invariably results in a change in the original characters within game A, which can have unintended and undesirable consequences.

### SUMMARY OF THE INVENTION

A system and method to integrate digital characters across multiple interactive games are described. Responsive to a request from a user to participate in an interactive game, a list including at least one character name is provided, each character name corresponding to a character useable in the interactive game, the character being associated with the user. Responsive to selection of a character name from the list by the user, at least one general attribute value associated with the character corresponding to the selected character name is retrieved from at least one general attributes table within a network-accessible database, the at least one general attribute value being used to process the associated character in the operation of the interactive game.

Other features and advantages of the present invention will be apparent from the accompanying drawings and from the detailed description that follows.

### BRIEF DESCRIPTION OF THE DRAWINGS

The present invention is illustrated by way of example and not limitation in the figures of the accompanying drawings, in which like references indicate similar elements and in which:

**Figure 1** is a block diagram illustrating an exemplary network-based transaction facility in the form of a network-based gaming facility.

**Figure 2** is a block diagram illustrating an exemplary database, maintained by and accessed via a database engine server, which at least partially implements and supports the network-based gaming facility.

**Figure 3** is an entity relationship diagram, according to an exemplary embodiment of the present invention, illustrating tables and corresponding relationships within the database.

**Figure 4** is an interaction diagram illustrating a sequence of interactions, according to an exemplary embodiment of the present invention, to integrate digital characters across multiple interactive games over a network.

**Figures 5A and 5B** are flow charts illustrating a method, according to an exemplary embodiment of the present invention, to integrate digital characters across multiple interactive games over a network.

**Figure 6** is a diagrammatic representation of a machine in the exemplary form of a computer system within which a set of instructions may be executed.

### DETAILED DESCRIPTION

According to embodiments described herein, a system and method to integrate digital characters across multiple interactive games are described. In the following detailed description of embodiments of the invention, reference is made to the accompanying drawings in which like references indicate similar elements, and in which are shown by way of illustration specific embodiments in which the invention may be practiced. These embodiments are described in sufficient detail to enable those skilled in the art to practice the invention, and it is to be understood that other embodiments may be utilized and that logical, mechanical, electrical, functional, and other changes may be made without departing from the scope of the present invention. The following detailed description is, therefore, not to be taken in a limiting sense, and the scope of the present invention is defined only by the appended claims.

As will be described in more detail below, responsive to a request from a user to participate in an interactive game, a list including at least one character name is provided, each character name corresponding to a character useable in the interactive game, the character being associated with the user. Responsive to selection of a character name from the list by the user, at least one general attribute value associated with the character corresponding to the selected character name is retrieved from at least one general attributes table within a network-accessible database, the at least one general attribute value being used to process the associated character in the operation of the interactive game.

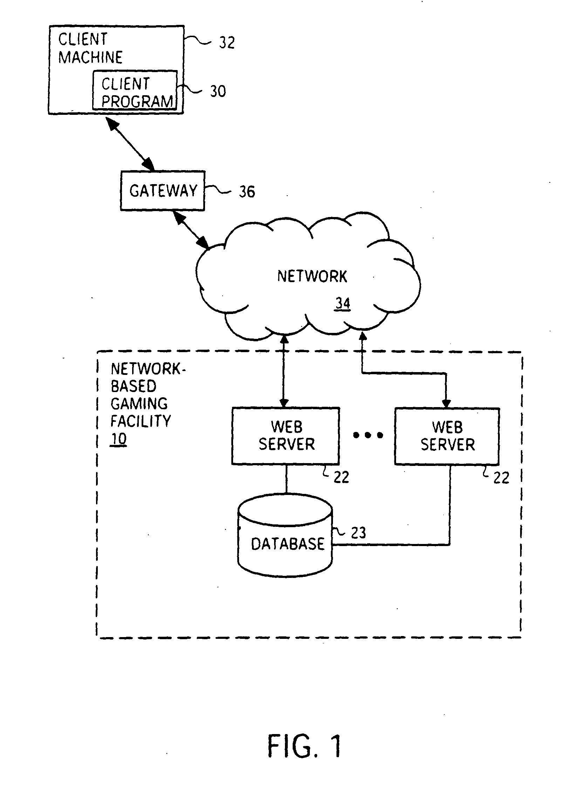

**Figure 1** is a block diagram illustrating an exemplary network-based transaction facility in the form of a network-based gaming facility 10. While an exemplary embodiment of the present invention is described within the context of a gaming facility, it will be appreciated by those skilled in the art that the invention will find application in many different types of computer-based, and network-based, facilities.

The gaming facility 10 includes one or more communications servers in the exemplary form of web servers 22 that deliver information to multiple entities. Each web server 22 maintains and facilitates access to a database 23 and is connected to a network 34.

In one embodiment, the network-based gaming facility 10 may be accessed by a client program 30, such as a Wireless Access Protocol (WAP) browser (e.g., the OpenWave WAP browser distributed by OpenWave Corporation) that executes on a client machine 32 and accesses the facility 10 via a WAP gateway 36 and the network 34, such as, for example, a wireless communications network. Other examples of networks that a client may utilize to access the gaming facility 10 includes the Internet, a wide area network (WAN), a local area network (LAN), or the Plain Old Telephone Service (POTS) network. Alternatively, the client program 30 is a Java Micro Edition program that executes on the client machine 32. In one embodiment, the client program 30 resides on the client machine 32. Alternatively, the client program 30 and the client machine 32 may reside in separate locations. In one embodiment, the WAP gateway 36 resides at a communications carrier's site, such as, for example, a wireless communications company.

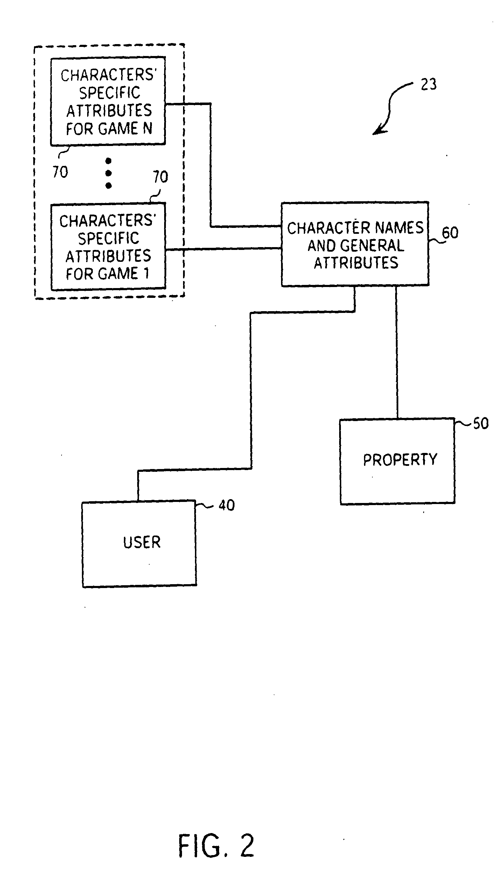

**Figure 2** is a block diagram illustrating an exemplary database 23, maintained by and accessed via a database engine server, which at least partially implements and supports the network-based gaming facility 10. The network-accessible database 23 may, in one embodiment, be implemented as a relational database, and includes a number of tables having entries that are linked by indices and keys. In an alternate embodiment, the database 23 may be implemented as a collection of objects in an object-oriented database.

Central to the database 23 shown in **Figure 2** is a user table 40, which contains information related to each entity or user of the gaming facility 10, including, for example, personal information, user identifiers, and other identification information associated with each user.

The database 23 is also shown to include multiple tables specifically implemented to enable an exemplary embodiment of the present invention. A character names and general attributes table 60 (hereinafter referred to as "general attributes table 60") includes information related to characters associated with each entity or user of the gaming facility 10 that have been set up for the collection of all available interactive games. User information stored in the user table 40 may be linked to multiple characters within the general attributes table 60.

The general attributes table 60 further includes information related to a predetermined number of general attributes associated with the stored characters including the name of each character and any other general attributes applicable to each and every character within the gaming facility 10, such as, for example, the strength and speed of the particular character. In an alternate embodiment, the general attributes may be stored in multiple tables similar to the general attributes table 60 and linked through indices and/or keys.

The database 23 further includes one or more game-specific attributes tables 70, each game-specific attributes table 70 corresponding to a particular interactive game and containing information related to a predetermined number. of game-specific attributes associated with each character. For example, if the interactive game is a football game, characters within the football game, e.g. football players, may develop game-specific attributes such as, for example, passing and/or catching skills, which would be stored in a respective table of football-specific attributes.

In one embodiment, the database 23 further includes a property table 50 containing information related to ownership of property, specifically possessions corresponding to each character stored in the general attributes table 60. The possessions stored within the property table 50 can range from general possessions, such as, for example, subscription awards, electronic coupons or discounts offered to the entity or user to incentivize participation in various interactive games, to specific possessions, such as objects associated with specific interactive games, such as, for example a magical sword in an interactive fantasy game.

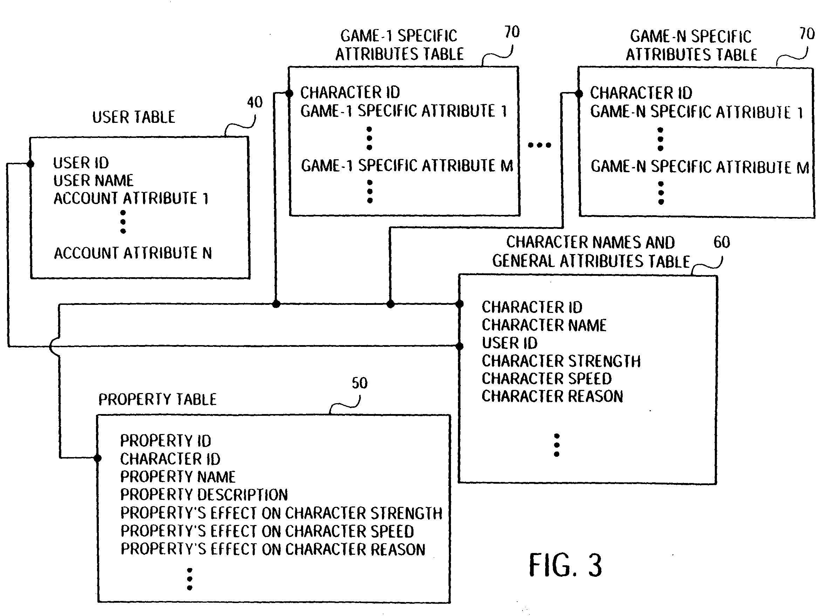

**Figure 3** is an entity relationship diagram, according to an exemplary embodiment of the present invention, illustrating tables and corresponding relationships within the database 23. As illustrated in **Figure 3**, in one embodiment, user table 40 includes entries containing information related to each entity or user of the gaming facility 10, such as, for example, a user identifier USER ID, the name of the user USER NAME, and multiple account attributes 1 through N, which relate to identification information associated with each user.

The general attributes table 60 is linked to the user table 40, for example via the USER ID entry, and includes entries containing information related to each character created and stored by a user, such as, for example, a character identifier CHARACTER ID, and the name of the character CHARACTER NAME. The general attributes table 60 further includes general attributes corresponding to each character developed by the entities or users for use in the interactive games, such as, for example, a CHARACTER STRENGTH general attribute, a CHARACTER SPEED general attribute, and a CHARACTER REASON general attribute. Each character identified by a CHARACTER ID and a CHARACTER NAME is associated to a set of values, each value corresponding to a general attribute. Each value represents a predetermined level of the general attribute achieved by the associated character across multiple interactive games.

In one embodiment, the general attributes stored within the general attributes table 60 are portable across the collection of interactive games and, thus, the values associated with such general attributes are transferable to any interactive game offered by the gaming facility 10. The general attributes table 60 may include other general attributes that apply to the stored characters, regardless of the interactive games that a particular user chooses to play.

As illustrated in **Figure 3**, in one embodiment, multiple game-specific attributes tables 70 are linked to the general attributes table 60, for example via the CHARACTER ID entry, each game specific attributes table 70 corresponding to a specific interactive game, for example GAME-1 through GAME-N. Each game-specific attributes table 70 includes attributes particular to the specific interactive game, such as a passing skill and a catching skill developed in playing a football game. In an alternate example of a fantasy game, a fantasy game-specific attributes table 70 would include a swordsmanship skill as an attribute specific to that game.

Referring back to **Figure 3**, in one embodiment, property table 50 is linked to the general attributes table 60, for example via the CHARACTER ID entry, and includes information related to each property or possession associated with specific interactive games, such as the PROPERTY ID, the name of the respective property or possession PROPERTY NAME, a description of the respective property PROPERTY DESCRIPTION, and multiple property attribute values, such as, for example, PROPERTY'S EFFECT ON CHARACTER STRENGTH, PROPERTY'S EFFECT ON CHARACTER SPEED, and PROPERTY'S EFFECT ON CHARACTER REASON.

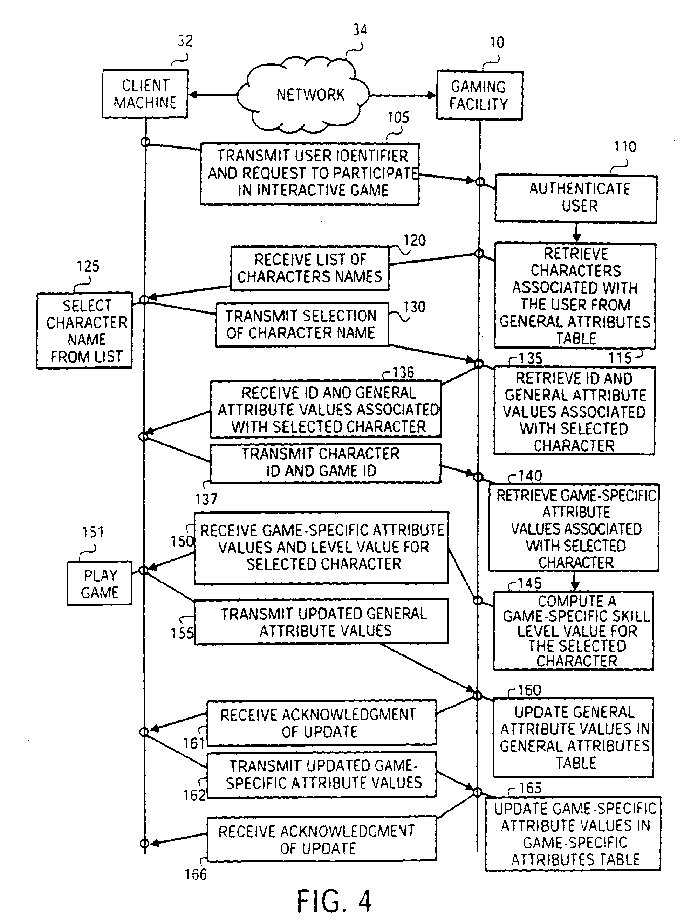

**Figure 4** is an interaction diagram illustrating a sequence of interactions, according to an exemplary embodiment of the present invention, to integrate digital characters across multiple interactive games over a network. As illustrated in **Figure 4**, the sequence commences at block 105, where a user wanting to participate in an interactive game accesses the gaming facility 10 via the client machine 32 and the network 34 and transmits a user identifier and a request to participate in the interactive game to the gaming facility 10. At block 110, the gaming facility 10 authenticates the user. In one embodiment, a web server 22 within the gaming facility 10 receives the user identifier from the client machine 32 and the request and compares the user identifier to user identifiers stored in the user table 40 in order to authenticate the user.

At block 115, responsive to the request and subsequent to the authentication, the gaming facility 10 retrieves character names from the general attributes table 60, each character name corresponding to a character useable in the interactive game, the character being associated with the user requesting access. In one embodiment, the web server 22 queries the general attributes table 60 within the database 23 and retrieves the list of pertinent character names.

At block 120, the gaming facility 10 provides the list of character names to the client machine 32 through the network 34. In one embodiment, the client machine 32 receives the list of character names from the web server 22 within the gaming facility 10.

At block 125, the user selects a character name from the list of character names provided. In one embodiment, the user selects the character name from the list displayed, and instructs the client machine 32 to transmit the selected character name to the gaming facility 10. At block 130, the client machine 32 transmits the selected character name to the gaming facility 10 via network 34.

At block 135, responsive to the selection of the character name, the gaming facility 10 retrieves a CHARACTER ID and general attribute values associated with the selected character from the general attributes table 60. In one embodiment, a web server 22 receives the selected character name and queries the general attributes table 60 within the database 23 to retrieve general attribute values associated with the selected character. For example, the web server 22 retrieves values corresponding to the CHARACTER STRENGTH, CHARACTER SPEED, and CHARACTER REASON general attributes of the selected character.

At block 136, the gaming facility 10 transmits the ID and the general attribute values associated with the selected character to the client machine 32 via the network 34. In one embodiment, a web server 22 transmits the ID and the general attribute values associated with the selected character to the client machine 32. Subsequent to the receipt of the ID and of the general attribute values, at block 137, the client machine 32 transmits the CHARACTER ID and the GAME ID of the particular interactive game to the gaming facility 10.

At block 140, the gaming facility 10 retrieves game-specific attribute values associated with the selected character from the game-specific attributes table 70 associated with the specific interactive game. In one embodiment, a web server 22 further queries the game-specific attributes table 70 within the database 23 to retrieve the game-specific attribute values for the selected character. For example, considering an interactive football game requested by the user, passing skill and catching skill game-specific attribute values are retrieved from the game-specific attributes table 70.

At block 145, the gaming facility 10 computes a game-specific skill level value for the selected character using the retrieved values of the respective general attributes and game-specific attributes. In one embodiment, a web server 22 computes the game-specific skill level value using one of any number of known quantification and equivalency formulas in order to indicate to the user the equivalent level of achievement of the selected character in the requested interactive game.

At block 150, the gaming facility 10 transmits the game-specific attribute values and the computed game-specific skill level value to the client machine 32 through the network 34 in order to allow the user to play the requested interactive game.

In an alternate embodiment, subsequent to the transmission of the computed skill level value and of the game-specific attribute values, a web server 22 within the gaming facility 10 further queries a property table 50 within the database 23 to retrieve a list of PROPERTY IDs associated with the selected character and transmits the list of PROPERTY IDs to the client machine 32 via the network 34. The client machine 32 receives the list, selects a PROPERTY ID from the list, and transmits the selected PROPERTY ID to the gaming facility 10 via the network 34. A web server 22 within the gaming facility 10 receives the selected PROPERTY ID and retrieves a PROPERTY NAME and property attribute values associated with the selected PROPERTY ID from the property table 50. The web server 22 further transmits the PROPERTY NAME and the property attribute values to the client machine 32 via the network 34.

In an alternate embodiment, the gaming facility 10 transmits the character names and the computed game-specific skill level values of possible game opponents to the client machine 32 through the network 34 in order to allow the user to choose the competition in a requested multiplayer interactive game.

At block 151, the user plays the selected interactive game on the client machine 32. In one embodiment, general attribute values and game-specific attribute values are modified during the interactive game and the equivalent skill level of the selected character may increase or decrease based on the game accomplishment obtained by the user. At the conclusion of the interactive game, at block 155, the client machine 32 transmits updated general attribute values to the gaming facility 10 via the network 34.

At block 160, the gaming facility 10 receives the updated general attribute values for the selected character and updates the general attributes table 60 within the database 23. In one embodiment, a web server 22 updates the general attributes table 60 with the updated general attribute values associated with the selected character. At block 161, the gaming facility 10 transmits an acknowledgement of update to the client machine 32 via the network 34.

At block 162, the client machine 32 further transmits updated game-specific attribute values to the gaming facility 10 via the network 34. At block 165, the gaming facility 10 receives the updated game-specific attribute values for the selected character and updates the corresponding game-specific attributes table 70 within the database 23. In one embodiment, a web server 22 updates the game-specific attributes table 70 with the updated game-specific attribute values associated with the selected character. Finally, at block 166, the gaming facility 10 transmits an acknowledgement of update to the client machine 32 via the network 34.

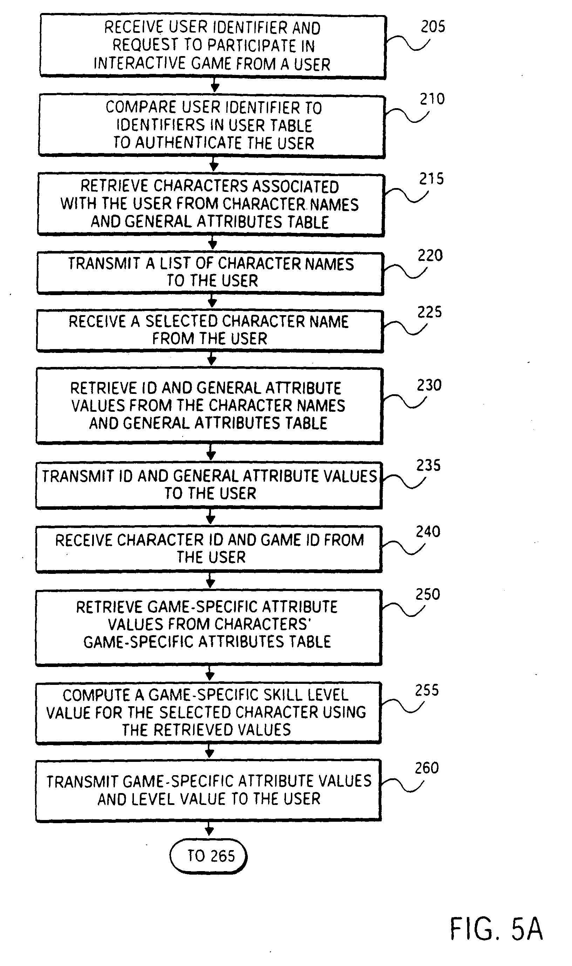

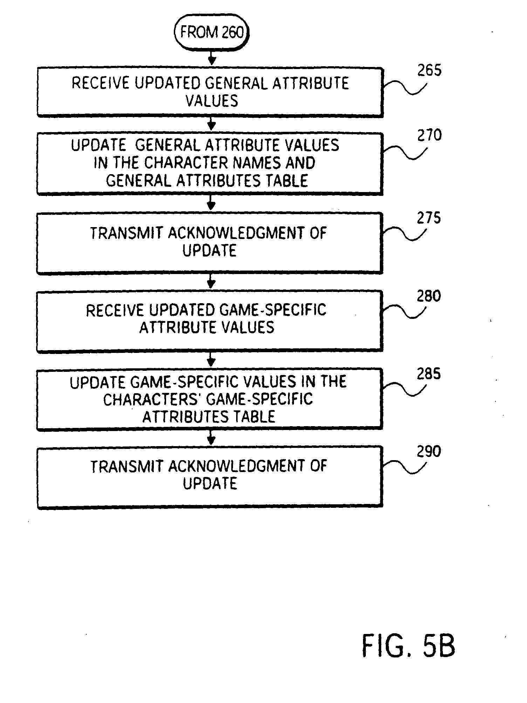

**Figures 5A** and **5B** are flow charts illustrating a method, according to an exemplary embodiment of the present invention, to integrate digital characters across multiple interactive games over a network.

Referring to **Figure 5A**, at processing block 205, a request to participate in an interactive game and a user identifier are received from a user. At processing block 210, the user identifier is compared with user identifiers stored in a user table 40 in order to authenticate the user.

At processing block 215, character names of characters associated with the user are retrieved from the general attributes table 60. At processing block 220, a list of the retrieved character names is transmitted to the user.

At processing block 225, a selected character name from the list of character names is received from the user. At processing block 230, a CHARACTER ID and general attribute values associated with the selected character are retrieved from the general attributes table 60. At processing block 235, the ID and the game-specific attribute values associated with the selected character are transmitted to the user.

At processing block 240, the CHARACTER ID and a GAME ID are received from the user. At processing block 250, game-specific attribute values associated with the selected character are retrieved from a game-specific attributes table 70 corresponding to the requested interactive game.

At processing block 255, an equivalent game-specific skill level value is computed for the selected character using the retrieved values of the general and game-specific attributes. At processing block 260, the computed game-specific skill level value and the game-specific attribute values are transmitted to the user.

In an alternate embodiment, subsequent to the transmission of the computed skill level value and of the game-specific attribute values, a list of PROPERTY IDs associated with the selected character is retrieved from a property table within the database 23 and transmitted to the user. A selected PROPERTY ID is further received from the user and a PROPERTY NAME and property attribute values associated with the selected PROPERTY ID are retrieved from the property table 50. The PROPERTY NAME and the property attribute values are subsequently transmitted to the user.

Referring to **Figure 5B**, at the conclusion of the interactive game, at processing block 265, updated general attribute values are received from the user.
At processing block 270, the general attributes table 60 is updated with the updated general attribute values. At processing block 275, an acknowledgement of the update is transmitted to the user.

At processing block 280, updated game-specific attribute values are received from the user. At processing block 285, the game-specific attributes table 70 associated with the interactive game is updated with the updated game-specific attribute values. Finally, at processing block 290, an acknowledgement of the update is transmitted to the user.

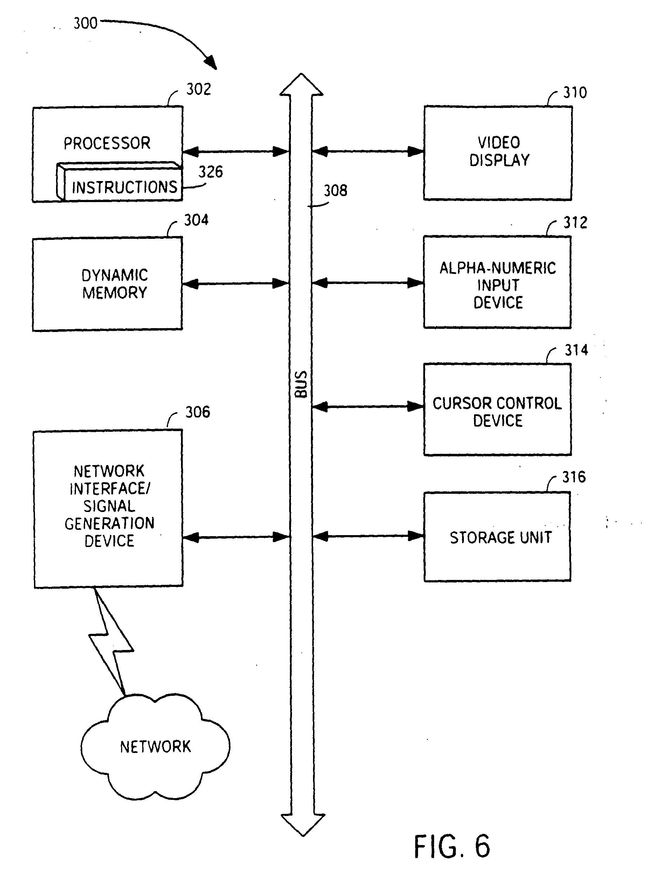

**Figure 6** shows a diagrammatic representation of a machine in the exemplary form of a computer system 300 within which a set of instructions, for causing the machine to perform any one of the methodologies discussed above, may be executed. In alternative embodiments, the machine may comprise a Personal Digital Assistant (PDA), a game console, a cellular telephone, a web appliance or any machine capable of executing a sequence of instructions that specify actions to be taken by that machine.

The computer system 300 includes a processor 302 and a dynamic memory 304, which may communicate with each other via a bus 308. The computer system 300 may further include a video display unit 310 (e.g., a liquid crystal display (LCD) or a cathode ray tube (CRT)). The computer system 300 may also include an alphanumeric input device 312 (e.g., a keyboard), a cursor control device 314 (e.g., a mouse), a storage unit 316, and a network interface/signal generation device 306.

A set of instructions (i.e., software) 326 embodying any one, or all, of the methodologies described above is shown to reside, completely or at least partially, within the processor 302. The software 326 may further be transmitted or received via the network interface/signal generation device 306.

It is to be understood that embodiments of this invention may be used as or to support software programs executed upon some form of processing core (such as the CPU of a computer) or otherwise implemented or realized upon or within a machine or computer readable medium. A machine readable medium includes any mechanism for storing or transmitting information in a form readable by a machine (e.g., a computer). For example, a machine readable medium includes read-only memory (ROM); random access memory (RAM); magnetic disk storage media; optical storage media; flash memory devices; electrical, optical, acoustical or other form of propagated signals (e.g., carrier waves, infrared signals, digital signals, etc.); or any other type of media suitable for storing or transmitting information. While embodiments of the present invention will be described with reference to the Internet and the World Wide Web, the system and method described herein is equally applicable to other network infrastructures or other data communication systems.

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

## Claims

1. A method comprising:
responsive to a request from a user to participate in an interactive game, providing a list including at least one character name, each character name corresponding to a character useable in said interactive game, said character being associated with said user; and
responsive to selection of a character name from said list by said user, retrieving at least one general attribute value associated with said character corresponding to said selected character name from at least one general attributes table within a network-accessible database, said at least one general attribute value being used to process said associated character in the operation of the interactive game.

2. The method according to claim 1, further comprising retrieving at least one game-specific attribute value associated with said character corresponding to said selected character name from at least one game-specific attributes table within said network-accessible database, said at least one game-specific attribute value being used to process said associated character in the operation of one and only one type of interactive game.

3. The method according to claim 1, wherein said at least one general attribute value is used to process said associated character in the operation of a plurality of different types of interactive games.

4. The method according to any preceding claim, wherein each character name in said network-accessible database is unique.

5. The method according to any preceding claim, further comprising:
transmitting said at least one general attribute value associated with said character to a client machine connected to said user.

6. The method according to claim 2, wherein said retrieving further comprises:
receiving a character identifier associated with said character and a game identifier associated with said interactive game from said user.

7. The method according to claim 2 or claim 6, further comprising:
computing a game-specific skill level value for said character using said at least one general attribute value and said at least one game-specific attribute value; and
transmitting said at least one game-specific attribute value associated with said character and said game-specific skill level value to a client machine connected to said user.

8. The method according to any preceding claim, further comprising:
receiving said request from said user;
receiving a user identifier from said user; and
comparing said user identifier with a plurality of identifiers stored in a user table within said network-accessible database in order to authenticate said user.

9. The method according to claim 2, further comprising:
receiving at least one updated general attribute value associated with said. character from a client machine connected to said user at conclusion of said interactive game; and
updating said at least one general attributes table within said network-accessible database with said at least one updated general attribute value.

10. The method according to claim 9, further comprising:
receiving at least one updated game-specific attribute value associated with said character from said client machine at said conclusion of said interactive game; and
updating said at least one game-specific attributes table within said network-accessible database with said at least one updated game-specific attribute value.

11. The method according to any preceding claim, wherein said network-accessible database is a relational database.

12. The method according to any preceding claim, wherein said user connects to a client machine and transmits said request through a Wireless Access Protocol (WAP) browser that executes on said client machine.

13. The method according to any of claims 1 to 11, wherein said user connects to a client machine and transmits said request through a Java Micro Edition program that executes on said client machine.

14. The method according to any preceding claim, further comprising:
providing a property list containing at least one property identifier associated with said character corresponding to said selected character name; and
responsive to selection of a property identifier from said property list by said user, retrieving at least one property value associated with said character from a property table within said network-accessible database, said at least one property value being used to process said associated character in the operation of said interactive game.

15. A computer program or a computer readable medium comprising instructions which, when executed in a processing system, cause said system to:
respond to a request from a user to participate in an interactive game by providing a list including at least one character name, each character name corresponding to a character useable in said interactive game, said character being associated with said user; and
respond to selection of a character name from said list by said user by retrieving at least one general attribute value associated with said character corresponding to said selected character name from at least one general attributes table within a network-accessible database, said at least one general attribute value being used to process said associated character in the operation of the interactive game.

16. A computer program product or computer readable medium according to claim 15 which, when executed, further causes said system to retrieve at least one game-specific attribute value associated with said character corresponding to said selected character name from at least one game-specific attributes table within said network-accessible database, said at least one game-specific attribute value being used to process said associated character in the operation of one and only one type of interactive game.

17. A computer program product or computer readable medium according to claim 15, in execution of which said at least one general attribute value is used to process said associated character in the operation of a plurality of different types of interactive games.

18. A computer program product or computer readable medium according to any of claims 15 to 17, in execution of which each character name in said network-accessible database is unique.

19. A computer program product or computer readable medium according to any of claims 15 to 18, which further causes said system to:
transmit said at least one general attribute value associated with said character to a client machine connected to said user.

20. A computer program product or computer readable medium according to claim 16, which further causes said system to:
receive a character identifier associated with said character and a game identifier associated with said interactive game from said user.

21. A computer program product or computer readable medium according to claim 16 or claim 20, which further causes said system to:
compute a game-specific skill level value for said character using said at least one general attribute value and said at least one game-specific attribute value; and
transmit said at least one game-specific attribute value associated with said character and said game-specific skill level value to a client machine connected to said user.

22. A computer program product or computer readable medium according to any of claims 15 to 21, which further causes said system to:
receive said request from said user;
receive a user identifier from said user; and
compare said user identifier with a plurality of identifiers stored in a user table within said network-accessible database in order to authenticate said user.

23. A computer program product or computer readable medium according to claim 16, which further causes said system to:
receive at least one updated general attribute value associated with said character from a client machine connected to said user at conclusion of said interactive game; and
update said at least one general attributes table within said network-accessible database with said at least one updated general attribute value.

24. A computer program product or computer readable medium according to claim 23, which further causes said system to:
receive at least one updated game-specific attribute value associated with said character from said client machine at said conclusion of said interactive game; and
update said at least one game-specific attributes table within said network-accessible database with said at least one updated game-specific attribute value.

25. A computer program product or computer readable medium according to any of claims 15 to 24, wherein said network-accessible database is a relational database.

26. A computer program product or computer readable medium according to any of claims 15 to 25, wherein said user connects to a client machine and transmits said request through a Wireless Access Protocol (WAP) browser that executes on said client machine.

27. A computer program product or computer readable medium according to any of claims 15 to 25, wherein said user connects to a client machine and transmits said request through a Java Micro Edition program that executes on said client machine.

28. A computer program product or computer readable medium according to any of claims 15 to 22, which further causes said system to:
provide a property list containing at least one property identifier associated with said character corresponding to said selected character name; and
respond to selection of a property identifier from said property list by said user, by retrieving at least one property value associated with said character from a property table within said network-accessible database, said at least one property value being used to process said associated character in the operation of said interactive game.

29. A system adapted to perform the method claims in any of claims 1 to 14.

30. A system as claimed in claim 29 comprising a server adapted to perform said method.
